# FASCICULE DE BREVET EUROPEEN

(11) **EP 2 179 875 B1**
(45) Date de publication et mention de la délivrance du brevet: **06.01.2016**
(21) Numéro de dépôt: 09173564.7
(22) Date de dépôt: 20.10.2009
(51) Int. Cl.: B60H 1/00

(54) **Installation de climatisation comprenant un module de stockage thermique constitutif d'une boucle secondaire de ladite installation**
Klimaanlage mit einem Speichermodul in einem Sekundärkreislauf
Air conditioning system having a thermal storage module in a secondary circuit

(30) Priorité: 23.10.2008 FR 0805890
(43) Date de publication de la demande: 28.04.2010
(73) Titulaire: Valeo Systèmes Thermiques, 78321 Le Mesnil Saint Denis (FR)
(72) Inventeur: Barat, Didier, 78690, LES ESSARTS LE ROI (FR); Neveu, Daniel, 91300, MASSY (FR); Yahia, Mohamed, 75005, PARIS (FR)
(74) Mandataire: Léveillé, Christophe

(56) Documents cités:
- EP-A- 1 967 396
- EP-A1- 1 533 154
- WO-A1-2007/110724
- DE-A1- 19 625 927
- FR-A- 2 851 503

## Description

### Domaine technique de l'invention

La présente invention est du domaine des installations de ventilation, de chauffage et/ ou de climatisation, notamment d'un véhicule automobile. Elle a pour objet une telle installation.

### Etat de la technique

Un véhicule automobile est couramment équipé d'une installation de ventilation, de chauffage et/ou de climatisation pour modifier les paramètres aérothermiques de l'air contenu à l'intérieur de l'habitacle du véhicule. Une telle modification est obtenue à partir de la délivrance à l'intérieur de l'habitacle d'un flux d'air traité thermiquement.

Pour refroidir le flux d'air, l'installation comporte une boucle de climatisation à l'intérieur de laquelle circule un fluide réfrigérant, tel qu'un fluide sous-critique, R134a ou analogue, ou tel qu'un fluide supercritique, dioxyde de carbone référencé R744 ou analogue. La boucle de climatisation comprend au moins un compresseur pour comprimer le fluide réfrigérant, un organe de détente et un évaporateur destiné à refroidir le flux d'air envoyé à l'intérieur. La boucle de climatisation comprend aussi un échangeur de chaleur agencé pour permettre un échange thermique entre le fluide réfrigérant et un fluide caloporteur circulant à l'intérieur d'une boucle secondaire, et notamment pour permettre que le fluide réfrigérant cède de la chaleur au fluide caloporteur. La boucle secondaire comporte un radiateur refroidit par l'air extérieur au véhicule, c'est-à-dire l'air qui traverse la face avant de ce dernier pour permettre un refroidissement du fluide caloporteur. On pourra par exemple se reporter au document FR 2,875,743 (VALEO THERMIQUE MOTEUR) qui décrit une telle installation.

Le document EP 1 533 154 A1 décrit une installation de climatisation d'un véhicule automobile selon la préambule de la revendication 1.

Le fluide réfrigérant subit à l'intérieur de la boucle de climatisation un cycle thermodynamique couramment décrit dans un diagramme enthalpique. Il est connu de déduire de ce diagramme un coefficient de performance de la boucle de climatisation, désigné par l'acronyme anglais « COP » et défini comme étant le rapport entre une puissance utile récupérée par l'évaporateur et une énergie consommée par le compresseur pour comprimer le fluide réfrigérant. Il est recherché par les concepteurs de telles installations que le coefficient de performance soit le plus élevé possible, par exemple de l'ordre de 2 à 4, pour procurer à un utilisateur du véhicule un confort thermique optimisé tout en maintenant une consommation d'énergie minimale par le compresseur. Il est connu que la valeur du coefficient de performance de ladite boucle est fortement dépendante de la valeur d'une température de sortie du fluide réfrigérant prise en sortie de l'échangeur de chaleur, dans le sens où plus ladite température de sortie est faible, plus la pression en ce point du circuit (haute pression) sera faible, plus le coefficient de performance est élevé. Or, la valeur de la température de sortie du fluide réfrigérant hors de l'échangeur de chaleur est dépendante d'une température d'entrée du fluide caloporteur prise en entrée de l'échangeur de chaleur. Il en découle finalement que pour obtenir un coefficient de performance élevé, il est souhaitable que ladite température d'entrée du fluide caloporteur soit la plus faible possible en toutes conditions.

Un problème général posé réside dans le fait que dans certaines conditions d'utilisation du véhicule, notamment lorsque ce dernier subit des phases répétées et successives de marche-arrêt, par exemple dues à des embouteillages, ladite température d'entrée du fluide caloporteur dans l'échangeur de chaleur qui échange avec le fluide réfrigérant tend à augmenter rapidement. Une telle augmentation de température est de surcroit amplifiée lorsque le véhicule est utilisé dans des conditions climatiques chaudes, dans lesquelles la température de l'air extérieur traversant le radiateur est fréquemment supérieure à 35°C. Cette température est susceptible d'atteindre 55°C dans les phases d'embouteillage car le moteur thermique du véhicule rayonne et vient réchauffer le ou les radiateurs ou composants situés en face avant du véhicule. Dans ces conditions, ladite température de sortie du fluide réfrigérant tend à augmenter également, ce qui provoque une détérioration du coefficient de performance de la boucle de climatisation.

Il en ressort qu'un problème spécifique dans le domaine réside dans la recherche d'une installation de ventilation, de chauffage et/ou de climatisation comprenant une boucle de climatisation comportant un échangeur de chaleur qui permette l'obtention de ladite température de sortie du fluide réfrigérant qui soit la plus basse possible, pour offrir un coefficient de performance le plus élevé possible quand les conditions de température extérieure dépassent 35°C, afin d'assurer un confort thermique optimisé à l'utilisateur du véhicule.

### Objet de l'invention.

Le but de la présente invention est de proposer une installation de climatisation comprenant une boucle de climatisation à l'intérieur de laquelle circule un fluide réfrigérant et comportant au moins un compresseur et un échangeur de chaleur permettant un échange de chaleur entre le fluide réfrigérant et un fluide caloporteur circulant à l'intérieur d'une boucle secondaire, ladite installation étant agencée pour permettre l'obtention d'un coefficient de performance de la boucle de climatisation qui soit le plus élevé possible, notamment compris entre 2 et 4, lors de phases successives et répétées d'avancement et d'arrêt du véhicule, par exemple dues à des embouteillages ou analogue, y compris lors d'utilisation du véhicule dans des conditions de température chaude, par exemple lorsque la température de l'air extérieur qui traverse un radiateur constitutif de la boucle secondaire est supérieure à 35°C.

Plus particulièrement, le but de la présente invention est de proposer une telle installation permettant l'obtention d'une température de sortie Ts du fluide réfrigérant en sortie dudit échangeur qui soit la plus basse possible quand la température du fluide caloporteur en sortie du radiateur dégrade les performances du circuit thermodynamique de la boucle de climatisation.

L'installation de la présente invention est une installation de climatisation d'un véhicule automobile selon la revendication 1 comprenant une boucle de climatisation à l'intérieur de laquelle circule un fluide réfrigérant et une boucle secondaire à l'intérieur de laquelle circule un fluide caloporteur. Au moins un échangeur de chaleur est constitutif de la boucle de climatisation et de ladite boucle secondaire. On entend par constitutif le fait que l'échangeur de chaleur permet un échange de chaleur entre le fluide réfrigérant et le fluide caloporteur.

Selon la présente invention, la boucle secondaire comprend au moins un module de stockage thermique pourvu d'au moins un matériau à changement de phase apte à échanger de la chaleur avec le fluide caloporteur.

Ces dispositions sont telles que lorsque le fluide caloporteur FC présente une température d'entrée Te à l'intérieur du module de stockage thermique 10 qui est supérieure à la température seuil Tf du matériau à changement de phase, ce dernier fond. La réaction de fusion étant endothermique, le matériau à changement de phase refroidit le fluide caloporteur FC, ce qui tend à abaisser une température de sortie Ts du fluide réfrigérant prise en sortie de l'échangeur de chaleur. Il en résulte qu'un coefficient de performance « COP » de la boucle de climatisation demeure élevé, notamment compris entre 2 et 4, ce qui permet de procurer un confort thermique optimisé (rendement) à un utilisateur du véhicule.

Quand le fluide caloporteur FC présente une température d'entrée Te à l'intérieur du module de stockage thermique 10 qui est inférieure à la température seuil Tf du matériau à changement de phase, ce dernier se charge en stockant les frigories, avantageusement en se solidifiant.

La boucle secondaire comprend au moins un radiateur agencé pour permettre un échange thermique entre le fluide caloporteur FC et un flux d'air extérieur. Selon une première variante de réalisation, l'échangeur de chaleur, le radiateur et le module de stockage thermique sont montés en série sur la boucle secondaire.

Selon une deuxième variante de réalisation, le module de stockage thermique est monté sur une dérivation de la boucle secondaire qui comporte un point d'entrée et un point de sortie du fluide caloporteur FC.

Le point d'entrée est préférentiellement pourvu d'une vanne trois-voies pour soit autoriser une circulation du fluide caloporteur FC à l'intérieur de la dérivation, soit interdire une telle circulation.

Le point d'entrée est ménagé entre une sortie d'une pompe de circulation du fluide caloporteur et une entrée de l'échangeur de chaleur, ou entre un point d'évacuation du fluide caloporteur hors du radiateur et un point d'admission du fluide caloporteur à l'intérieur de l'échangeur de chaleur.

Avantageusement, le point de sortie est ménagé entre le point d'entrée et le point d'admission du fluide caloporteur à l'intérieur de l'échangeur de chaleur. Plus précisément, le point de sortie du module est entre un point d'évacuation du fluide caloporteur hors du radiateur et un point d'admission du fluide caloporteur à l'intérieur de l'échangeur de chaleur.

Selon une autre variante de réalisation, le point de sortie est ménagé entre un orifice d'évacuation du fluide caloporteur hors de l'échangeur de chaleur et un point d'admission dans une pompe de circulation du fluide caloporteur.

Dans une autre variante de réalisation, le module de stockage thermique est agencé en un échangeur thermique qui stocke les frigories à partir d'un échange avec le fluide caloporteur et qui restitue directement, c'est-à-dire sans passer par l'intermédiaire du fluide caloporteur, ses frigories au fluide réfrigérant de la boucle de climatisation.

Enfin le matériau à changement de phase présente une température seuil comprise entre 30°C et 35°C.

### Description des figures

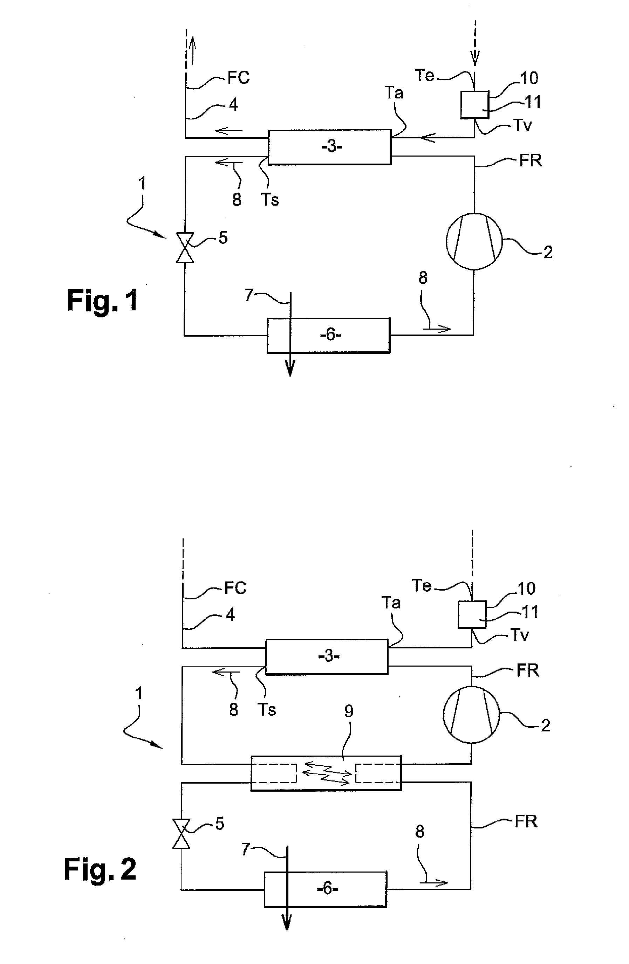

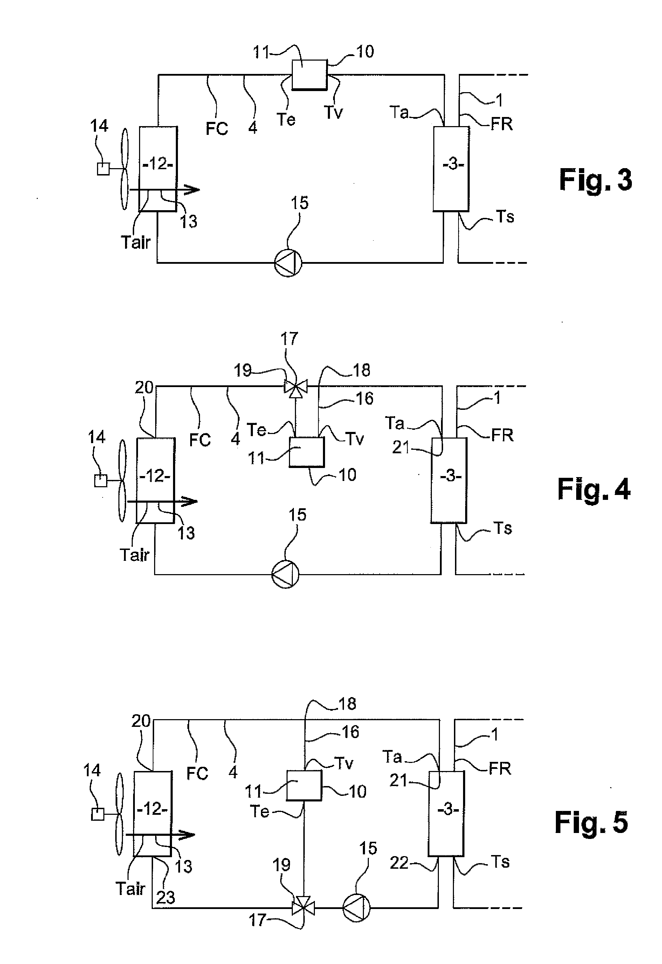

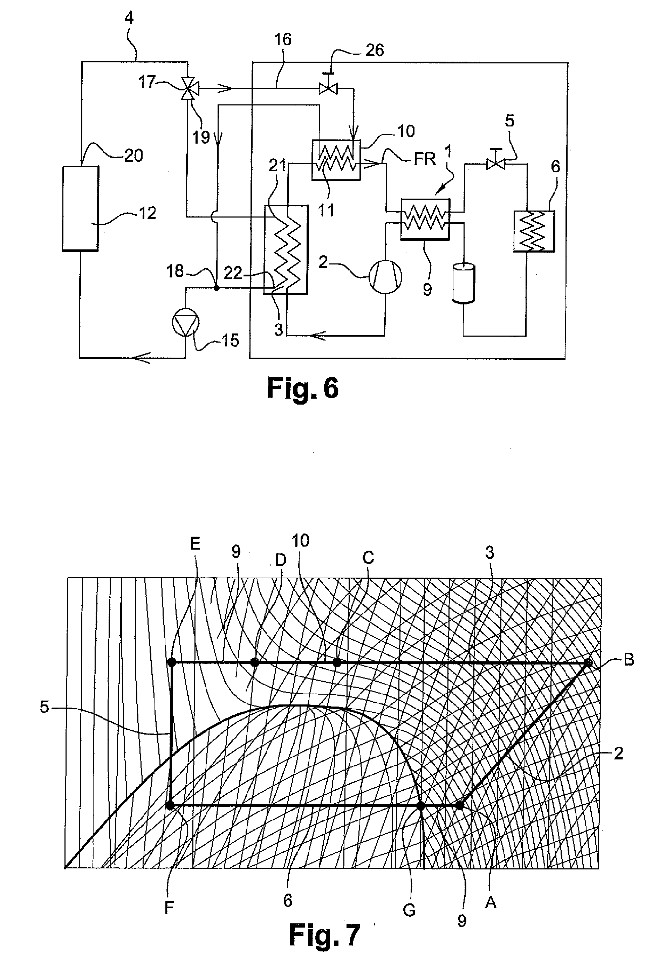

La présente invention sera mieux comprise, et des détails en relevant apparaîtront, à la lecture de la description qui va être faite de variantes de réalisation en relation avec les figures des planches annexées, dans lesquelles : Les fig.1 et fig.2 sont des illustrations schématiques de variantes respectives de réalisation d'une installation de ventilation, de chauffage et/ou de climatisation de la présente invention. Les fig.3 à fig.6 sont des illustrations schématiques de variantes respectives de réalisation d'une boucle secondaire participante de l'installation illustrée sur les figures précédentes. La fig.7 est un diagramme enthalpique décrivant un cycle thermodynamique accompli par un fluide réfrigérant supercritique circulant à l'intérieur d'une boucle de climatisation constitutive de l'installation illustrée sur la fig.2.

Un véhicule automobile est équipé d'une installation de climatisation pour modifier les paramètres aérothermiques de l'air contenu à l'intérieur de l'habitacle du véhicule. Sur les fig.1 et fig.2, l'installation comprend une boucle de climatisation 1 à l'intérieur de laquelle circule un fluide réfrigérant FR. La boucle de climatisation 1 comporte un compresseur 2 pour comprimer le fluide réfrigérant FR, un échangeur de chaleur 3 apte à refroidir le fluide réfrigérant FR en cédant de la chaleur à un fluide caloporteur FC circulant à l'intérieur d'une boucle secondaire 4, un organe de détente 5 à l'intérieur duquel le fluide réfrigérant FR subit une détente et un évaporateur 6 apte à refroidir un flux d'air 7 le traversant préalablement à la délivrance de ce dernier 7 à l'intérieur de l'habitacle du véhicule.

Le fluide réfrigérant FR est par exemple un fluide sous-critique, tel que le R134a ou analogue. Dans ce cas, l'échangeur de chaleur 3 est un condenseur qui est interposé sur la boucle de climatisation 1 représentée sur la fig.1 entre le compresseur 2 et l'organe de détente 5 selon un sens de circulation 8 du fluide réfrigérant FR à l'intérieur de la boucle de climatisation 1.

Le fluide réfrigérant FR est par exemple encore un fluide supercritique, tel que le dioxyde de carbone R744 ou analogue. Dans ce cas, l'échangeur de chaleur 3 est un refroidisseur de gaz qui remplace le condenseur utilisé dans la boucle à fluide réfrigérant sous-critique. Sur la boucle de climatisation 1 représentée sur la fig.2, une échangeur de chaleur interne 9 échange entre la partie haute pression de la boucle de climatisation et la partie basse pression de cette même boucle. Cette échangeur interne 9 comporte un premier circuit interposé selon le sens de circulation 8 du fluide réfrigérant FR à l'intérieur de la boucle de climatisation 1 entre la sortie du refroidisseur de gaz 3 et l'entrée de l'organe de détente 5 et un second circuit interposé selon le sens de circulation 8 du fluide réfrigérant FR à l'intérieur de la boucle de climatisation 1 entre la sortie de l'évaporateur 6 et l'entrée du compresseur 2.

Pour que l'échangeur de chaleur 3 permette l'obtention d'une température de sortie Ts du fluide réfrigérant FR en sortie de l'échangeur de chaleur 3 qui soit la plus basse possible, en vue d'offrir un coefficient de performance « COP » de la boucle de climatisation 1 qui soit le plus élevé possible de sorte à assurer un confort thermique optimisé à l'utilisateur du véhicule, il est proposé par la présente invention que la boucle secondaire 4 comprenne au moins un module de stockage thermique 10 pourvu d'au moins un matériau à changement de phase 11 apte à échanger de la chaleur avec le fluide caloporteur FC. Ces dispositions sont telles que lorsqu'une température d'entrée Te du fluide caloporteur FC entrant à l'intérieur dudit module 10 est supérieure à une température seuil Tf du matériau à changement de phase 11, ce dernier 11 fond. La réaction de fusion étant endothermique, le matériau à changement de phase 11 restitue les frigories stockées précédemment et ainsi refroidit le fluide caloporteur FC, de telle sorte qu'une température d'évacuation Tv du fluide caloporteur FC hors dudit module 10 soit maintenue la plus basse possible. Il en résulte qu'une température d'admission Ta du fluide caloporteur FC à l'intérieur de l'échangeur de chaleur 3 est aussi la plus basse possible. Il en découle que la température de sortie Ts du fluide réfrigérant FR en sortie de l'échangeur de chaleur 3 est également la plus basse possible. Il en ressort finalement qu'un coefficient de performance « COP » de la boucle de climatisation 1 demeure élevé, notamment compris entre 2 et 4, ce qui permet de procurer un confort thermique optimisé à un utilisateur du véhicule. Le fluide caloporteur circule dans la boucle secondaire 4 dans un sens déterminé, c'est-à-dire en provenance d'un radiateur placé dans la face avant (radiateur 12 sur la figure 3) vers le module de stockage thermique 10 puis vers l'échangeur de chaleur 3.

Sur les fig.3 à fig.6, la boucle secondaire 4 comprend également un radiateur 12 apte à échanger de la chaleur avec un flux d'air extérieur 13 mis en mouvement par effet dynamique du déplacement du véhicule ou généré par un groupe moto-ventilateur 14. La boucle secondaire 4 comprend enfin une pompe 15 pour faire circuler le fluide caloporteur FC.

Sur la fig.3, le radiateur 12, le module de stockage thermique 10 et l'échangeur de chaleur 3 sont disposés en série sur la boucle secondaire 4.

Lorsqu'une température Tair du flux d'air extérieur 13 est inférieure à la température seuil Tf du matériau à changement de phase 11, autrement dit que cette dernière température Tf est supérieure à la température d'entrée Te du fluide caloporteur FC à l'intérieur dudit module 10, le matériau à changement de phase 11 stocke les frigories en se solidifiant. Ceci est le cas en phase de roulage en des conditions normales, par exemple sur autoroute où l'échange entre l'air extérieur 13 et le fluide caloporteur FC via l'échangeur de chaleur 12 permet de faire descendre la température du fluide caloporteur FC en dessous de la température de solidification du matériau à changement de phase de sorte à charger des frigories dans ce dernier.

En revanche, quand la température de l'air extérieur 13 augmente, cela entraîne une augmentation corrélative de la température du fluide caloporteur FC. Ainsi, lorsque la température d'entrée Te du fluide caloporteur FC à l'intérieur dudit module 10 est supérieure à la température seuil Tf du matériau à changement de phase 11, ce dernier fond, ce qui tend à refroidir le fluide caloporteur FC. De telles conditions apparaissent notamment lorsque le véhicule est temporairement à l'arrêt et que le flux d'air extérieur 13 présente une température Tair élevée, par exemple supérieure à 35°C. En fondant, le matériau à changement de phase restitue les frigories accumulées pendant les phases de roulages dites normales au fluide caloporteur FC qui par conséquent assure un meilleur refroidissement de l'échangeur de chaleur 3. Ainsi, le fluide réfrigérant FR est mieux refroidit ce qui permet de maintenir sa pression en dessous d'un seuil au dessus duquel le coefficient de performance COP de la boucle de climatisation 1 sera dégradé. En d'autres termes, le module de stockage thermique 10 pallie le défaut de refroidissement du radiateur de face avant 12, au moins pendant une durée déterminée qui correspond aux phases d'arrêt en embouteillage.

Sur les fig.4 à fig.6, le module de stockage thermique 10 est monté sur une dérivation 16 de la boucle secondaire 4. Cette dernière 4 s'étend entre un point d'entrée 17 et un point de sortie 18 du fluide caloporteur FC. Le point d'entrée 17 est pourvu d'une vanne trois-voies 19 permettant soit d'autoriser une circulation du fluide caloporteur FC à l'intérieur de la dérivation 16, soit d'interdire une telle circulation. Le passage entre l'état ouvert et l'état fermé de la vanne trois-voies 19 est susceptible d'être réalisé progressivement pour permettre un échange thermique gradué entre ledit matériau 11 et le fluide caloporteur FC.

Cette structure en parallèle du module de stockage thermique 10 vis-à-vis de la boucle secondaire 4 permet de contourner le module 10 quand ce dernier est complètement chargé en frigories, de sorte à limiter les pertes de charges dans le circuit de la boucle secondaire 4. Cette agencement évite aussi de d'échanger avec le matériau à changement de phase 11 inutilement, c'est-à-dire quand ce dernier est complètement fondu et qu'il n'est plus en mesure d'assurer sa fonction de refroidissement. Ici aussi, on limite les pertes de charges dans le circuit.

La circulation du fluide caloporteur FC à l'intérieur de la dérivation 16 est autorisée lorsque la température Tair du flux d'air extérieur 13 est inférieure à la température seuil Tf du matériau à changement de phase 11, et que cette dernière Tf est supérieure à la température d'entrée Te du fluide caloporteur FC à l'intérieur dudit module 10. Ces dispositions visent à solidifier le matériau à changement de phase 11. La circulation du fluide caloporteur FC à l'intérieur de la dérivation 16 est encore autorisée lorsque la température Tair du flux d'air extérieur 13 est supérieure à la température seuil Tf du matériau à changement de phase 11, et que cette dernière Tf du flux d'air extérieur 13 est inférieure ou égale à la température d'entrée Te du fluide caloporteur FC à l'intérieur dudit module 10. Ces dispositions visent à permettre une fusion du matériau à changement de phase 11, ce qui induit un abaissement de la température d'évacuation Tv du fluide caloporteur FC hors dudit module 10.

Sur la variante de la figure 4, le point d'entrée 17 du module de stockage thermique 10 est ménagé entre un point d'évacuation 20 du fluide caloporteur FC hors du radiateur 12 et un point d'admission 21 du fluide caloporteur FC à l'intérieur de l'échangeur de chaleur 3 alors que le point de sortie 18 du module de stockage thermique 10 est ménagé entre le point d'entrée 17 et le point d'admission 21 du fluide caloporteur FC à l'intérieur de l'échangeur de chaleur 3.

Sur la fig.5, le point d'entrée 17 du module de stockage thermique 10 est ménagé entre la sortie de la pompe de circulation 15 et l'entrée 23 de l'échangeur de chaleur 12 alors que le point de sortie 18 du module de stockage thermique 10 est ménagé entre le point d'évacuation 20 du fluide caloporteur FC hors du radiateur 12 et un point d'admission 21 du fluide caloporteur FC à l'intérieur de l'échangeur de chaleur 3.

Sur la figure 6, le point d'entrée 17 du module de stockage thermique 10 est ménagé entre la sortie ou point d'évacuation 20 du radiateur 20 et le point d'entrée 21 de l'échangeur de chaleur 3 alors que le point de sortie 18 du module de stockage thermique 10 est ménagé entre le point ou orifice d'évacuation 22 du fluide caloporteur FC hors de l'échangeur de chaleur 3 et un point d'admission de la pompe de circulation 15.

La figure 6 diffère des variantes décrites précédemment en ce que le module de stockage thermique 10 restitue ses frigories directement au fluide réfrigérant FR de la boucle de climatisation sans passer par le fluide caloporteur FC de la boucle secondaire 4, comme c'est le cas des variantes montrées aux figures 1 à 5.

Lorsque la température d'entrée Te du fluide caloporteur FC à l'intérieur dudit module 10 est supérieure à la température seuil Tf dudit matériau 11, une vanne complémentaire 26 est fermée pour interdire une circulation du fluide caloporteur FC à l'intérieur dudit module 10. Il en découle que le matériau à changement de phase 11 est à même de refroidir directement le fluide réfrigérant FR circulant à l'intérieur de la boucle de climatisation 1.

Quand le température du fluide caloporteur FC en sortie du radiateur 20 est inférieure à la température de solidification du matériau à changement de phase 11, la vanne complémentaire 26 est ouverte pour autoriser le chargement des frigories dans ce dernier. Ceci est le cas quand le véhicule est en conditions normales de roulage, c'est-à-dire que le refroidissement fourni en face avant du véhicule sur le radiateur 12 est suffisant pour assurer le refroidissement de la boucle de climatisation 1 de sorte à obtenir un coefficient de performance COP supérieur à 2. On comprend ici que la boucle secondaire 4 délivre plus d'énergie que nécessaire si bien, le surplus étant alors stocké dans le module de stockage thermique 10 via le matériau à changement de phase 11. Sur la fig. 7, le diagramme enthalpique illustre le cycle thermodynamique subi par le fluide réfrigérant FR circulant à l'intérieur de la boucle de climatisation 1 représentée sur la fig.2 quand le véhicule est en phase d'embouteillage, c'est-à-dire quand le matériau à changement de phase 11 restitue ses frigories au fluide réfrigérant, soit directement soit via le fluide caloporteur FC de la boucle secondaire 4. Les phases successives du cycle A-B, B-C, C-D, D-E, E-F, F-G et G-A, sont respectivement réalisées à l'intérieur du compresseur 2, de l'échangeur de chaleur 3, dudit module de stockage thermique 10, de l'échangeur de chaleur interne 9 (côté haute pression), de l'organe de détente 5, de l'évaporateur 6 et à nouveau de l'échangeur de chaleur interne 9 (côté basse pression). Il apparaît clairement que la présence dudit module 10 sur la boucle secondaire 2 permet d'augmenter l'étape B-E pour obtenir un meilleur refroidissement du fluide réfrigérant FR et ainsi maintenir un coefficient de performance le plus élevé qu'en l'absence du dispositif selon l'invention.

On comprend donc que le module de stockage thermique 10 pourvu du matériau à changement de phase 11 échange avec le fluide réfrigérant FR, directement ou via le fluide caloporteur FC et n'échange pas avec l'air à refroidir. Contrairement à l'art antérieur, le module de stockage 10 a pour fonction de prolonger le refroidissement du fluide réfrigérant FR de sorte à maintenir sa température à un niveau satisfaisant malgré une élévation de la température de l'air extérieur qui traverse le radiateur 12. L'utilisation des frigories stockées est directement associée à une réduction ou un maintien de la température maximale du fluide réfrigérant FR. On maintient ainsi une bonne performance frigorifique de la boucle de climatisation 1 pendant un laps de temps où les conditions externes se dégradent, ce qui permet de maintenir les occupants du véhicule au niveau de confort attendu.

Le matériau à changement de phase 11 est choisi en fonction de sa température seuil Tf qui doit permettre au matériau à changement de phase de se comporter comme une zone dite tampon susceptible de capter des frigories dans certains cas et de les restituer dans d'autres. Selon les conditions climatiques et les plages d'optimisation visées de consommation énergétique, la température Tf de fusion du matériau à changement de phase est choisie typiquement de l'ordre de 25°C à 50°C. Une sélection avantageuse s'opère entre 25°C et 35°C car le coefficient de performance de la boucle de climatisation se dégrade de manière notable quand la température du fluide réfrigérant en sortie du refroidisseur de gaz/condenseur 3 dépasse ces températures, ce qui se traduit par une puissance consommée par le compresseur 2 anormalement importante.

## Revendications

1. Installation de climatisation d'un véhicule automobile comprenant
une boucle de climatisation (1) à l'intérieur de laquelle circule un fluide réfrigérant (FR) et une boucle secondaire (4) à l'intérieur de laquelle circule un fluide caloporteur (FC),
au moins un échangeur de chaleur (3) qui échange entre le fluide caloporteur (FC) et le fluide réfrigérant (FR),
la boucle secondaire (4) comprenant au moins un module de stockage thermique (10) pourvu d'au moins un matériau à changement de phase (11) apte à échanger avec le fluide caloporteur (FC),
le matériau à changement de phase (11) restitue ses frigories au fluide réfrigérant (FR), soit directement, soit via le fluide caloporteur (FC) de la boucle secondaire (4), le matériau à changement de phase (11) stockant des frigories lorsqu'une température d'entrée (Te) du fluide caloporteur (FC) entrant à l'intérieur dudit module de stockage thermique (10) est inférieure à une température seuil (Tf) du matériau à changement de phase (11).
**caractérisée en ce que**
ladite boucle secondaire (4) comprenant au moins un radiateur (12) agencé pour permettre un échange thermique entre le fluide caloporteur (FC) et un flux d'air extérieur (13),

2. Installation selon la revendication 1, dans laquelle le matériau à changement de phase (11) restitue les frigories lorsqu'une température d'entrée (Te) du fluide caloporteur (FC) entrant à l'intérieur dudit module de stockage thermique (10) est supérieure à la température seuil (Tf) du matériau à changement de phase (11).

3. Installation selon la revendication 1 ou 2, dans laquelle l'échangeur de chaleur (3), le radiateur (12) et le module de stockage thermique (10) sont montés en série sur la boucle secondaire (4).

4. Installation selon la revendication 1 ou 2, dans laquelle le module de stockage thermique (10) est monté sur une dérivation (16) de la boucle secondaire (4) qui comporte un point d'entrée (17) et un point de sortie (18) du fluide caloporteur (FC).

5. Installation selon la revendication 4, dans laquelle le point d'entrée (17) est pourvu d'une vanne trois voies (19) pour autoriser ou interdire une circulation du fluide caloporteur (FC) à l'intérieur de la dérivation (16).

6. Installation selon l'une quelconque des revendications 4 ou 5, dans laquelle le point d'entrée (17) est ménagé entre un point d'évacuation (20) du fluide caloporteur (FC) hors du radiateur (12) et un point d'admission (21) du fluide caloporteur (FC) à l'intérieur de l'échangeur de chaleur (3).

7. Installation selon l'une quelconque des revendications 4 ou 5, dans laquelle le point d'entrée (17) est ménagé entre une sortie d'une pompe (15) de circulation du fluide caloporteur (FC) et une entrée (23) de l'échangeur de chaleur (12).

8. Installation selon l'une quelconque des revendications 4 à 7, dans laquelle le point de sortie (18) est ménagé entre le point d'entrée (17) et le point d'admission (21) du fluide caloporteur (FC) à l'intérieur de l'échangeur de chaleur (3).

9. Installation selon la revendication 7, dans laquelle le point de sortie (18) est ménagé entre un point d'évacuation (20) du fluide caloporteur (FC) hors du radiateur (12) et un point d'admission (21) du fluide caloporteur (FC) à l'intérieur de l'échangeur de chaleur (3).

10. Installation selon l'une quelconque des revendications 4 à 6, dans laquelle le point de sortie (18) est ménagé entre un orifice d'évacuation (22) du fluide caloporteur (FC) hors de l'échangeur de chaleur (3) et un point d'admission dans une pompe (15) de circulation du fluide caloporteur (FC).

11. Installation selon l'une quelconque des revendications précédentes, dans laquelle le module de stockage thermique (10) est agencé en un échangeur thermique qui stocke les frigories à partir d'un échange avec le fluide caloporteur (FC) et qui restitue directement ses frigories au fluide réfrigérant (FR) de la boucle de climatisation (1).

12. Installation selon l'une quelconque des revendications précédentes, dans laquelle le matériau à changement de phase (11) présente une température seuil (Tf) comprise entre 25°C et 35°C.

## Patentansprüche

1. Klimaanlage eines Kraftfahrzeugs, die Folgendes umfasst:
eine Klimatisierungsschleife (1), in der ein Kühlmittelfluid (FR) fließt, und
eine sekundäre Schleife (4), in der ein Wärmeaustauschfluid (FC) fließt,
wenigstens einen Wärmetauscher (3), der zwischen dem Wärmeaustauschfluid (FC) und dem Kühlmittelfluid (FR) austauscht,
wobei die sekundäre Schleife (4) wenigstens ein Wärmespeichermodul (10) umfasst, das mit wenigstens einem Phasenänderungsmaterial (11) versehen ist, das mit dem Wärmeaustauschfluid (FC) austauschen kann,
wobei das Phasenänderungsmaterial (11) seine Wärmemenge an das Kühlmittelfluid (FR) entweder direkt oder über das Wärmeaustauschfluid (FC) der sekundären Schleife (4) abgibt, wobei das Phasenänderungsmaterial (11) eine Wärmemenge speichert, wenn eine Eingangstemperatur (Te) des Wärmeaustauschfluids (FC), das in das Wärmespeichermodul (10) eintritt, niedriger als eine Schwellentemperatur (Tf) des Phasenänderungsmaterials (11) ist,
**dadurch gekennzeichnet, dass**
die sekundäre Schleife (4) wenigstens einen Kühlkörper (12) umfasst, der dafür ausgelegt ist, einen Wärmeaustausch zwischen dem Wärmeaustauschfluid (FC) und einem Außenluftstrom (13) zu ermöglichen.

2. Anlage nach Anspruch 1, wobei das Phasenänderungsmaterial (11) seine Wärmemenge abgibt, wenn eine Eingangstemperatur (Te) des Wärmeaustauschfluids (FC), das in das Wärmespeichermodul (10) eintritt, höher als die Schwellentemperatur (Tf) des Phasenänderungsmaterials (11) ist.

3. Anlage nach Anspruch 1 oder 2, wobei der Wärmetauscher (3), der Kühlkörper (12) und das Wärmespeichermodul (10) in der sekundären Schleife (4) in Reihe montiert sind.

4. Anlage nach Anspruch 1 oder 2, wobei das Wärmespeichermodul (10) in einem Abzweig (16) der sekundären Schleife (4) montiert ist, der einen Eingangspunkt (17) und einen Ausgangspunkt (18) des Wärmeaustauschfluids (FC) enthält.

5. Anlage nach Anspruch 4, wobei der Eingangspunkt (17) mit einem Dreiwegeventil (19) versehen ist, um eine Zirkulation des Wärmeaustauschfluids (FC) in dem Abzweig (16) zuzulassen oder zu verhindern.

6. Anlage nach einem der Ansprüche 4 oder 5, wobei der Eingangspunkt (17) zwischen einem Entleerungspunkt (20) für das Wärmeaustauschfluid (FC) aus dem Kühlkörper (12) und einem Einlasspunkt (21) für das Wärmeaustauschfluid (FC) in den Wärmetauscher (3) ausgebildet ist.

7. Anlage nach einem der Ansprüche 4 oder 5, wobei der Eingangspunkt (17) zwischen einem Ausgang einer Umwälzpumpe (15) für das Wärmeaustauschfluid (FC) und einem Eingang (23) des Wärmetauschers (12) ausgebildet ist.

8. Anlage nach einem der Ansprüche 4 bis 7, wobei der Ausgangspunkt (18) zwischen dem Eingangspunkt (17) und dem Einlasspunkt (21) des Wärmeaustauschfluids (FC) in den Wärmetauscher (3) ausgebildet ist.

9. Anlage nach Anspruch 7, wobei der Ausgangspunkt (18) zwischen einem Entleerungspunkt (20) des Wärmeaustauschfluids (FC) aus dem Kühlkörper (12) und einem Einlasspunkt (21) des Wärmeaustauschfluids (FC) in den Wärmetauscher (3) ausgebildet ist.

10. Anlage nach einem der Ansprüche 4 bis 6, wobei der Ausgangspunkt (18) zwischen einer Entleerungsöffnung (22) für das Wärmeaustauschfluid (FC) aus dem Wärmetauscher (3) und einem Einlasspunkt in die Umwälzpumpe (15) des Wärmeaustauschfluids (FC) ausgebildet ist.

11. Anlage nach einem der vorhergehenden Ansprüche, wobei das Wärmespeichermodul (10) als ein Wärmetauscher ausgebildet ist, der die Wärmemenge ausgehend von einem Austausch mit dem Wärmeaustauschfluid (FC) speichert und seine Wärmemenge direkt an das Kühlmittelfluid (FR) der Klimatisierungsschleife (1) abgibt.

12. Anlage nach einem der vorhergehendem Ansprüche, wobei das Phasenänderungsmaterial (11) eine Schwellentemperatur (Tf) im Bereich von 25 °C bis 35 °C besitzt.

## Claims

1. Motor vehicle air conditioning system comprising
an air conditioning circuit (1) through which there circulates a refrigerant fluid (FR) and
a secondary circuit (4) through which there circulates a coolant fluid (FC),
at least one heat exchanger (3) which exchanges between the coolant fluid (FC) and the refrigerant fluid (FR),
the secondary circuit (4) comprising at least one thermal storage module (10) provided with at least one phase-change material (11) able to exchange with the coolant fluid (FC),
the phase-change material (11) yields its frigories to the refrigerant fluid (FR) either directly or via the coolant fluid (FC) of the secondary circuit (4), the phase-change material (11) storing frigories when an inlet temperature (Te) of the coolant fluid (FC) entering said thermal storage module (10) is below a threshold temperature (Tf) of the phase-change material (11),
**characterized in that**
the said secondary circuit (4) comprises at least one radiator (12) designed to allow an exchange of heat between the coolant fluid (FC) and a flow of external air (13).

2. System according to Claim 1, in which the phase-change material (11) yields the frigories when an inlet temperature (Te) of the coolant fluid (FC) entering the said thermal storage module (10) is higher than the threshold temperature (Tf) of the phase-change material (11).

3. System according to Claim 1 or 2, in which the heat exchanger (3), the radiator (12) and the thermal storage module (10) are mounted in series on the secondary circuit (4).

4. System according to Claim 1 or 2, in which the thermal storage module (10) is mounted on a branch (16) off the secondary circuit (4) which comprises an inlet point (17) and an outlet point (18) for the coolant fluid (FC).

5. System according to Claim 4, in which the inlet point (17) is provided with a three-way valve (19) to allow or prohibit circulation of the coolant fluid (FC) through the branch (16).

6. System according to either one of Claims 4 and 5, in which the inlet point (17) is formed between a discharge point (20) at which the coolant fluid (FC) is discharged from the radiator (12) and an intake point (21) at which the coolant fluid (FC) is admitted to the heat exchanger (3).

7. System according to either one of Claims 4 and 5, in which the inlet point (17) is formed between an outlet of a pump (15) for circulating the coolant fluid (FC) and an inlet (23) of the heat exchanger (12).

8. System according to any one of Claims 4 to 7, in which the outlet point (18) is formed between the inlet point (17) and the intake point (21) at which the coolant fluid (FC) is admitted to the heat exchanger (3).

9. System according to Claim 7, in which the outlet point (18) is formed between a discharge point (20) at which the coolant fluid (FC) is discharged from the radiator (12) and an intake point (21) at which the coolant fluid (FC) is admitted to the heat exchanger (3).

10. System according to any one of Claims 4 to 6, in which the outlet point (18) is formed between a discharge orifice (22) at which the coolant fluid (FC) is discharged from the heat exchanger (3) and an intake point at which the coolant fluid (FC) is admitted to a pump (15) that circulates same.

11. System according to any one of the preceding claims, in which the thermal storage module (10) is arranged as a heat exchanger which stores frigories from an exchange with the coolant fluid (FC) and which yields its frigories directly to the refrigerant fluid (FR) of the air conditioning circuit (1).

12. System according to any one of the preceding claims, in which the phase-change material (11) has a threshold temperature (Tf) of between 25°C and 35°C.
